# EUROPEAN PATENT SPECIFICATION

(11) **EP 1 712 505 B1**
(45) Date of publication and mention of the grant of the patent: **22.06.2011**
(21) Application number: 06005083.8
(22) Date of filing: 13.03.2006
(51) Int. Cl.: B65H 54/28, H02K 33/00

(54) **Yarn traverse apparatus**
Fadenchangiervorrichtung
Dispositif de va-et-vient de fil textile

(30) Priority: 15.04.2005 JP 2005117726
(43) Date of publication of application: 18.10.2006
(73) Proprietor: MURATA KIKAI KABUSHIKI KAISHA, Minami-ku Kyoto-shi Kyoto 601 (JP)
(72) Inventor: Masai, Tetsuji, Kusatsu-shi Shiga (JP); Umehara, Yoshito, Uji-shi Kyoto (JP)
(74) Representative: Liedl, Christine

(56) References cited:
- EP-A- 0 979 791
- WO-A-98/42606
- DE-A1- 4 336 312
- DE-A1- 19 816 201
- US-A- 3 094 292
- US-A- 4 287 457
- US-A- 5 682 129
- "DEFINITE AND SPECIAL-PURPOSE MOTORS" MACHINE DESIGN, PENTON MEDIA, CLEVELAND, OH, US, vol. 59, no. 11, 14 May 1987 (1987-05-14), page 58,60,62,64,, XP000023805 ISSN: 0024-9114

## Description

### Field of the Invention

The present invention relates to a yarn traverse apparatus that reciprocates a yarn guide using a driving device, and in particular, to the configuration of the driving device for the yarn traverse apparatus.

### Background of the Invention

In a yarn traverse apparatus in which a yarn guide is reciprocated using a driving device, a yarn supplied via the yarn guide needs to be prevented from being protuberated at the opposite ends of a bobbin around which the yarn is wound. To achieve this, the yarn needs to be turned as quickly as possible at the opposite ends of a stroke of the yarn guide. US 3,094,292 discloses a yarn traverse apparatus according to the preamble of claim 1. The Published Japanese translation of PCT international publication (Toku-Hyo) (hereinafer referred to as "Toku-Hyo".) No. 2002-532365 discloses a technique described below.

A driving device for a yarn traverse apparatus disclosed in the Toku-Hyo No. 2002-532365 comprises a pivoting arm, a yarn guide provided at a free end of the arm, a rotating shaft attached to a pivotal center of the arm, a coil support member extended from the rotating shaft to a side opposite to the yarn guide, an electric coil wound around the coil support member, a gap into which a part of the electric coil is inserted, and a yoke and a permanent magnet that generate a magnetic flux in the gap. The electric coil is thus placed on an operating portion side including the arm, and this minimizes the weight of the operating portion to reduce the inertia of the operating portion side. Consequently, quick turns are achieved at the opposite ends of the stroke of the yarn guide.

To enable quick turns at the opposite ends of the stroke of the yarn guide, it is possible, for example, to (1) reduce the inertia of the operating portion or to (2) increase a torque applied to the operating portion. However, with the yarn traverse apparatus described in the Toku-Hyo No. 2002-532365, the inertia of the operating portion may disadvantageously increase when the torque applied to the operating portion is increased in order to enable quick turns at the opposite ends of the stroke of the yarn guide. That is, the yarn traverse apparatus described in the Toku-Hyo No. 2002-532365 requires the distance from the pivotal center of the arm to the electric coil to be increased in order to increase the torque applied to the operating portion. This may disadvantageously increase the size of the operating portion and thus its inertia. Consequently, it is difficult for the traverse apparatus in the Toku-Hyo No. 2002-532365 to achieve quick turns at the opposite ends of the stroke of the yarn guide. The traverse apparatus in the Toku-Hyo No. 2002-532365 is also disadvantageous in terms of manufacture in that it is difficult for the electric coil to be appropriately wound around the coil support member, and this traverse apparatus also disadvantageously has a complicated structure. It is thus an object of the present invention to provide a yarn traverse apparatus that enables quick turns at the opposite ends of the stroke of the yarn guide.

### Summary of the Invention

A description has been given of the problems to be solved by the present invention. Now, a description will be given of means for solving the problems.

First, as set forth in Claim 1, the present invention provides a yarn traverse apparatus comprising a driving device for reciprocating a yarn guide to guide a yarn, wherein the driving device comprises a rotating shaft associated with the yarn guide and reciprocatively rotating to reciprocate the yarn guide a cylindrical permanent magnet is mounted around an outer periphery of the rotating shaft , wherein
a plurality of electromagnets are arranged along the outer periphery of the permanent magnet via a ring-shaped gap so that the electromagnets surround the permanent magnet to generate a magnetic flux between the electromagnets and the permanent magnet through the gap,
each electromagnet includes an electrical coil and a yoke that is a fixed iron core and is composed of an inner arc portion , an outer arc portion and a connecting portion that connects the inner arc portion and the outer arc portion together, and
the electric coil is wound around the connecting portion and the plurality of yokes are formed cylindrically and arranged so that the adjacent yokes contact each other at their inner arc portions and outer arc portions.

As set forth in Claim 2, the ratio of the axial length to diameter of the permanent magnet is at least 0.7.

As set forth in Claim 3, the permanent magnet is a rare earth magnet.

As set forth in Claim 4, the permanent magnet has a maximum residual magnetic flux density of at least 0.3 tesla.

A base end of an arm is fixed to the rotating shaft of the driving device, and the yarn guide is fixed to a tip of the arm.

The present invention, configured as described above, exerts effects described below.

In the traverse apparatus described in the Toku-Hyo No. 2002-532365, the coil support member extends far from the rotating shaft in a radial direction, thus increasing the inertia of the operating portion. In contrast, in the invention set forth in Claim 1, the permanent magnet is placed around the periphery of the rotating shaft. This serves to reduce the inertia of the operating portion to enable quick turns. The invention set forth in Claim 1 also has a simple structure and is easy to manufacture.

In connection with the invention described in Claim 2, the inertia of the permanent magnet, which affects the magnitude of inertia of the operating portion, is in proportion to the square of diameter of the permanent magnet and in proportion to the axial length of the permanent magnet. Accordingly, when the diameter of the permanent magnet is reduced, the inertia can be effectively decreased. Further, to increase the torque applied to the rotating shaft, it is necessary to increase the outer peripheral area of the permanent magnet and thus the magnitude of a magnetic flux generated in the gap between the permanent magnet and the electromagnets. Therefore, the outer peripheral area of the permanent magnet needs to be increased with its diameter reduced, that is, the axial length of the permanent magnet needs to be increased, in order to increase the torque applied to the rotating shaft while reducing the inertia of the operating portion side. Thus, by setting the ratio of the axial length to diameter of the permanent magnet at 0.7 or more as set forth in Claim 2, it is possible to reduce the inertia to obtain a torque required for quick turns at the opposite ends of the stroke of the yarn guide. As a result, the quality of the product can be improved.

In the invention set forth in Claim 3, the permanent magnet is a rare earth magnet, which has a high magnetic anisotropy, and this enables an intense magnetic flux to be generated in the gap between the outer periphery of the rare earth magnet and an inner periphery of the electromagnets. A large torque can thus be applied to the rotating shaft to achieve quick turns at the opposite ends of the stroke of the yarn guide. As a result, the quality of the product can be improved.

In the invention set forth in Claim 4, the permanent magnet has a maximum residual magnetic flux density of at least 0.3 tesla. This enables an intense magnetic flux to be generated in the gap between the outer periphery of the permanent magnet and the inner periphery of the electromagnets, and a large torque can thus be applied to the rotating shaft to achieve quick turns at the opposite ends of the stroke of the yarn guide. As a result, the quality of the product can be improved.

The base end of the arm is fixed to the rotating shaft of the driving device, and the yarn guide is fixed to the tip of the arm. This serves to provide a yarn traverse apparatus which enables quick turns at the opposite ends of the stroke of the yarn guide and which has a simple configuration.

### Brief Description of the Drawings

Figure 1 is a perspective view of a yarn traverse apparatus 1 showing an embodiment of the present invention.
Figure 2 is a front view of the yarn traverse apparatus.
Figure 3 is a side sectional view of the yarn traverse apparatus.
Figure 4 is a front sectional view of a driving device 2 in the yarn traverse apparatus.
Figure 5 is a front view of a yarn traverse apparatus 8 in accordance with another embodiment of the present invention.

### Detailed Description of the Preferred Embodiments

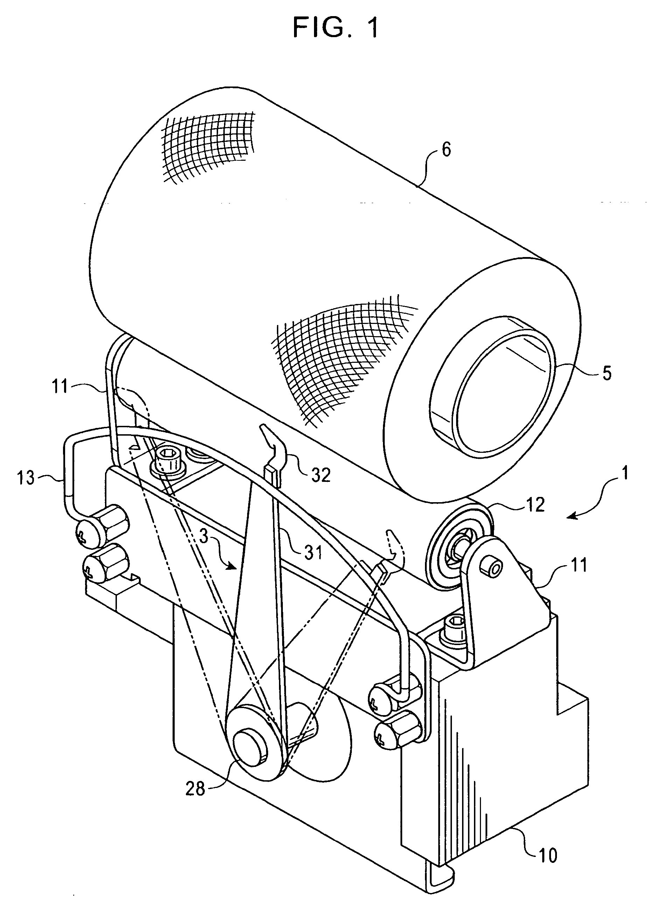

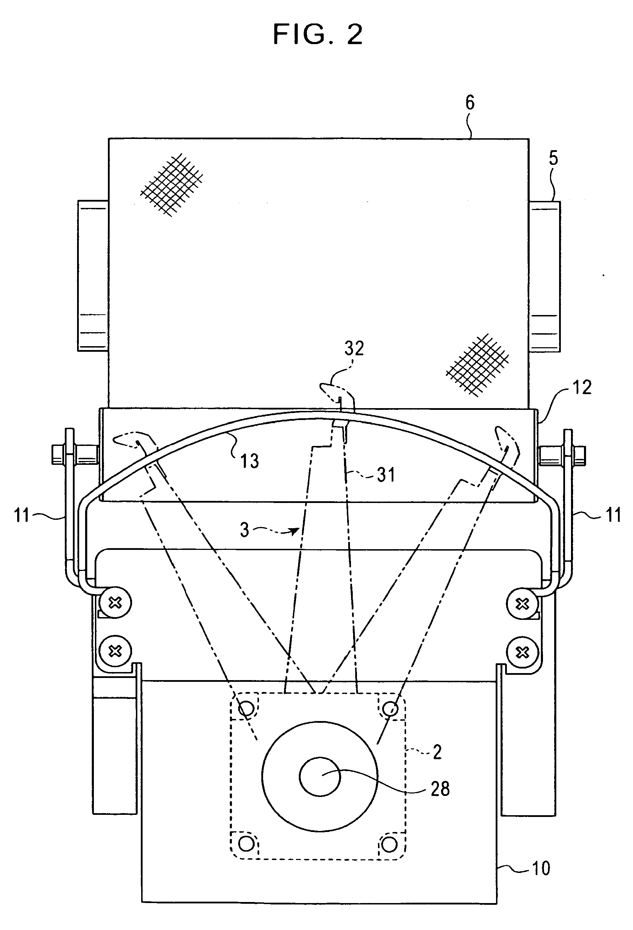

Now, an embodiment of the present invention will be described with reference to the drawings. As shown in Figures 1, 2, and 3, a yarn traverse apparatus 1 comprises a driving device 2 serving as a driving source, a housing 10 in which the driving device 2 is mounted, a yarn finger 3 attached to an outer end of a rotating shaft 28 of the driving device 2. Further, the outer end projects from a front surface of the housing 10. The yarn traverse apparatus 1 also comprises a pair of L-shaped stays 11, 11 mounted on laterally opposite ends of a top surface of the housing 10, a guide roller 12 rotatably supported at upper ends of the pair of stays 11, 11, and a inverse-U-shaped guide frame 13 mounted on the opposite ends of top of a front surface of the housing 10 and placed along the trajectory of a tip (upper end) of the yarn finger 3. A winding bobbin 5 serving as a winding tube is supported at its opposite ends in an axial direction above the guide roller 12 by a support frame (not shown in the drawings). A cylindrical package 6 is formed around an outer peripheral surface of the winding bobbin 5 so as to make contact with the guide roller 12. The winding bobbin 5 is rotatively driven by a rotative driving device (not shown in the drawings) provided on the support frame.

The yarn finger 3 comprises an arm 31 having a base end (lower end) attached to the rotating shaft 28 of the driving device 2 and a yarn guide 32 attached to a tip (upper end) of the arm 31 and to which a yarn is engaged. The arm 31 is formed of an elongate plate and the yarn guide 32 is formed like a hook. The arm 31 and the rotating shaft 28 of the driving device 2 are arranged so that a longitudinal direction of the arm 31 is orthogonal to an axial direction of the rotating shaft 28. A lower end of the arm 31 is fixedly attached to the outer end of the rotating shaft 28.

A forward and backward rotations of the rotating shaft 28 of the driving device 2 causes the yarn guide 32 located at the tip of the yarn finger 3 to reciprocate while drawing a circular trajectory, and the yarn guide 32 reciprocates within the range between the opposite ends of the package 6 in an axial direction. A yarn guided by the yarn guide 32 is wound around the package 6 while being laterally traversed by the forward and backward rotations of the rotating shaft 28 of the driving device 2. The yarn is thus evenly wound between the opposite ends of the package 6.

Now, a description will be given of the driving device 2 in accordance with the present invention. In the driving device 2 in accordance with the present invention, an operating portion side (rotor side) is constructed by mounting a permanent magnet around an outer periphery of the rotating shaft, to which the yarn finger 3 is attached. A fixed side (stator side) is constructed by arranging a plurality of electromagnets along the permanent magnet so that the electromagnets surround the permanent magnet.

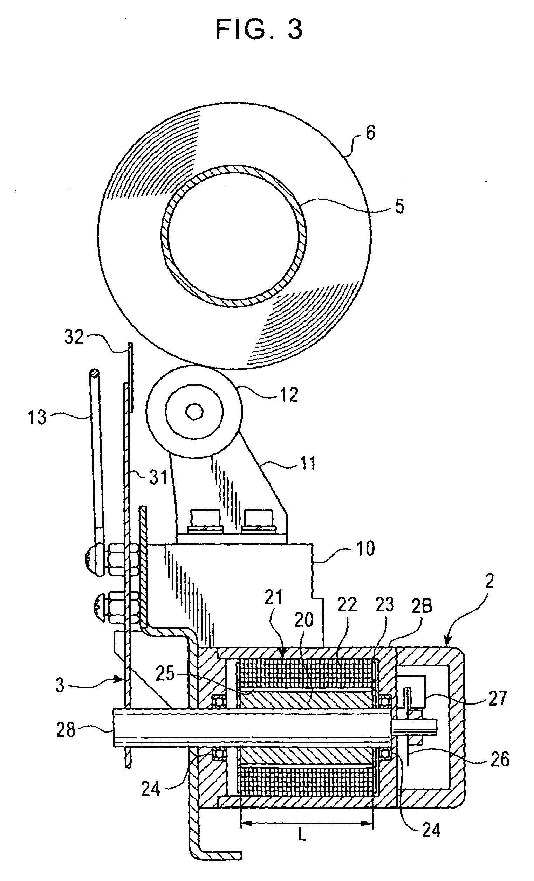

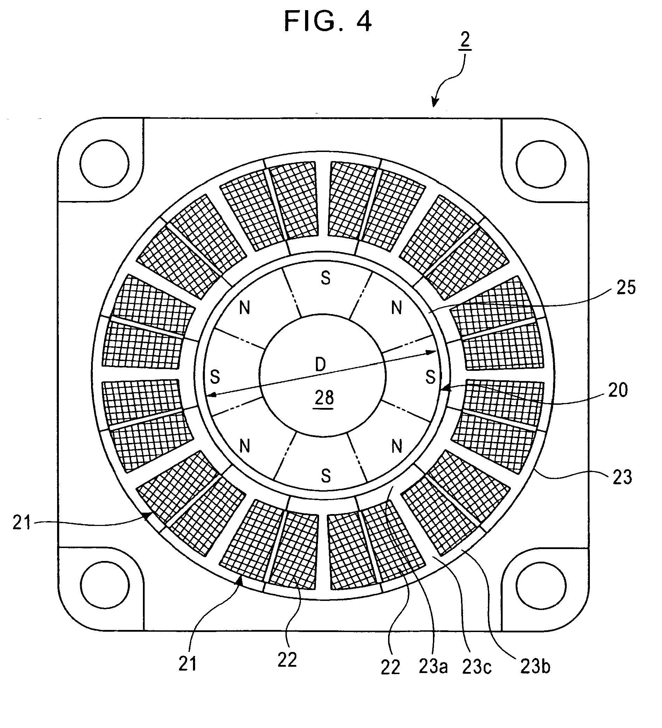

More specifically, as shown in Figures 3 and 4, the driving device 2 comprises the rotating shaft 28, fixed to the yarn finger 3 and rotating clockwise and counterclockwise together with the yarn finger 3, a cylindrical permanent magnet 20 mounted around the outer periphery of the rotating shaft 28, a group of plural electromagnets 21 arranged along an outer periphery of the permanent magnet 20 and formed cylindrically, a ring-shaped gap 25 formed between the outer periphery of the permanent magnet 20 and the inner periphery of the group of electromagnets 21, and bearings 24, 24 serving as bearing members rotatably supporting longitudinally opposite sides of the rotating shaft 28. The permanent magnet 20 and the group of electromagnets 21 are concentrically arranged around the axis of the rotating shaft 28.

A disk-shaped detected object 26 is attached to an end of the rotating shaft 28 of the driving device 2. Further, the end lies opposite the yarn finger 3 side. A large number of slits are arranged on a disk surface of the detected object 26 in a circumferential direction of the detected object 26 so that their longitudinal direction coincides with a radial direction of the disk surface. An encoder 27 serving as optical detecting means is attached to a housing main body 2B side of the driving device 2, and the detected object 26 is partly inserted into a U-shaped detecting portion of the encoder 27. The encoder 27 counts the slits in the detected object 26 to sequentially detect the rotating position of the rotating shaft 28.

The result of detection by the encoder 27 is sent to a control device (not shown in the drawings). The control device then controls the driving device 2 on the basis of the detection result. This configuration enables the position and speed of the yarn guide 32 to be arbitrarily controlled as required.

In the present embodiment, the group of electromagnets 21 is composed of twelve electromagnets 12. Each electromagnet 21 is composed of a yoke 23 that is a fixed iron core and an electric coil 22 that generates magnetic fields. The yoke 23 is composed of an inner arc portion 23a, an outer arc portion 23b, and a connecting portion 23c that connects the inner arc portion 23a and the outer arc portion 23b together. An electric coil 22 is wound around the connecting portion 23c. A plurality of the yokes 23 are formed cylindrically and arranged so that the adjacent yokes 23 contact each other at their inner arc portions 23a and outer arc portions 23b. A current passed through the electric coil 22 of each electromagnet 21 generates a magnetic flux between the electromagnet 21 and the permanent magnet 20 through the gap 25.

The electric coil 22 is wound around the connecting portion 23c so that a magnetic flux flows from the inner arc portion 23a through the connecting portion 23c to the outer arc portion 23b or from the outer arc portion 23b through the connecting portion 23c to the inner arc portion 23a depending on the direction in which a current is conducted through the electric coil 22. The conduction through the electric coil 22 of each electromagnet 21 is thus controlled for the whole group of electromagnets 21 so that a clockwise or counterclockwise rotating magnetic field is generated around the rotator including the permanent magnet 20. Therefore, the rotator is rotated forward or backward by controlling the conduction through the electric coil 22 of each electromagnet 21 depending on the angular position of the rotator including the permanent magnet 20.

In the present embodiment, the permanent magnet 20 is magnetized so as to form eight poles on its outer circumference including alternately arranged S and N poles. The ratio of the axial length L to diameter D of the permanent magnet 20 is set at 0.7 or more. This maximizes a torque applied to the rotating shaft 28 while minimizing the inertia of the rotating shaft 28 side.

More specifically, when the size of the rotating shaft 28 is assumed to remain changed in order to maintain rigidity or the like, the inertia of the operating portion side depends on the inertia of the permanent magnet 20, mounted around the outer periphery of the rotating shaft 28. The inertia of the permanent magnet 20 is in proportion to the square of diameter D of the permanent magnet 20 and in proportion to the axial length L of the permanent magnet 20. When the diameter of the permanent magnet 20 is reduced, the inertia can be effectively decreased. Further, to increase the torque applied to the rotating shaft 28, it is necessary to increase the area of outer peripheral surface of the permanent magnet 20 and thus the magnitude of an effective magnetic flux generated in the gap 25 between the permanent magnet 20 and the electromagnets 21. Therefore, the outer peripheral area of the permanent magnet 20 is preferably increased with its diameter D reduced, that is, the axial length L of the permanent magnet 20 needs to be increased, in order to increase the torque applied to the rotating shaft 28 while reducing the inertia of the operating portion side. The present invention sets the ratio of the axial length L to diameter D of the permanent magnet at 0.7 or more, and this enables the simultaneous accomplishment of both reduced inertia and increased torque, and required quick turns can thus be achieved at the opposite ends of the stroke of the yarn guide 32.

The permanent magnet 20 is a rare earth magnet, which has a high magnetic anisotropy. The permanent magnet 20 is magnetized so as to have a maximum residual magnetic flux density of at least 0.3 tesla. This configuration enables a more intense magnetic flux to be generated in the gap 25 between the outer periphery of the permanent magnet 20 and the inner periphery of the electromagnets 21. A larger torque can thus be applied to the rotating shaft 28 of the driving device 2, and quick turns can therefore be achieved at the opposite ends of the stroke of the yarn finger 3.

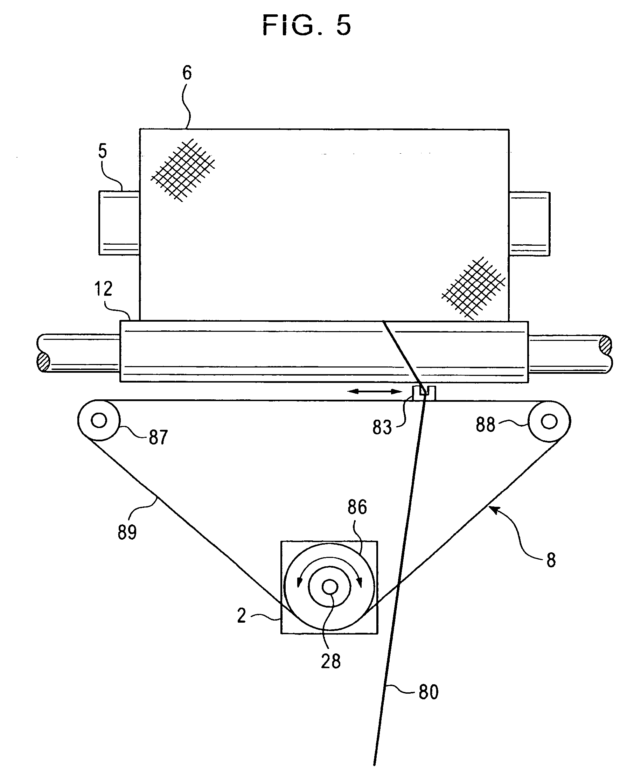

The driving device 2 for the yarn traverse apparatus 1 in accordance with the present invention is configured as described above. The driving device 2 is applicable not only to the yarn traverse apparatus 1 having the arm type yarn finger 3 shown in Figures 1 to 3 but also to a belt type yarn traverse apparatus 8 shown in Figure 5. In short, the configuration of the yarn traverse apparatus to which the driving device is applicable is not limited provided that the yarn traverse apparatus reciprocates the yarn guide by reciprocating the rotating shaft of the driving device.

The belt type yarn traverse apparatus 8 will be described. The yarn traverse apparatus 8 comprises a lateral pair of follower pulleys 87, 88, a driving pulley 86 placed on a perpendicular bisector of a line joining the rotation axes of the paired follower pulleys 87, 88, an endless belt 89 wound around the driving pulley 86 and follower pulleys 87, 88, and a yarn guide 83 mounted on the endless belt 89 between the follower pulleys 87, 88 and reciprocated between the follower pulleys 87, 88 by forward and backward rotation of the driving pulley 86. The rotating shaft 28 of the driving shaft 2 is mounted along a rotation axis of the driving pulley 86.

The above configuration enables even the belt type yarn traverse apparatus 8 to achieve quick turns at the opposite ends of the stroke of the yarn guide 83.

This makes it possible to improve the quality of the product.

In the examples described above in the embodiments, the driving device 2 is a servo motor in which the stator generates a rotating magnetic field to rotate the rotor. However, the driving device 2 may be a permanent magnet type stepping motor or the like in which pole teeth are provided on the stator so that a pulse train is applied to the electric coil to rotate the rotor through a specified angle.

## Claims

1. A yarn traverse apparatus comprising a driving device (2) for reciprocating a yarn guide (32) to guide a yarn, wherein
the driving device (2) comprises a rotating shaft (28) associated with the yarn guide (32) and reciprocatively rotating to reciprocate the yarn guide (32),
a cylindrical permanent magnet (20) is mounted around an outer periphery of the rotating shaft (28),
**characterized in that**
a plurality of electromagnets (21) are arranged along the outer periphery of the permanent magnet (20) via a ring-shaped gap (25) so that the electromagnets (21) surround the permanent magnet (20) to generate a magnetic flux between the electromagnets (21) and the permanent magnet (20) through the gap (25),
each electromagnet (21) includes an electrical coil (22) and a yoke (23) that is a fixed iron core and is composed of an inner arc portion (23a), an outer arc portion (23b) and a connecting portion (23c) that connects the inner arc portion (23a) and the outer arc portion (23b) together, and
the electric coil (22) is wound around the connecting portion (23c), and
the plurality of yokes (23) are formed cylindrically and arranged so that the adjacent yokes (23) contact each other at their inner arc portions (23a) and outer arc portions (23b).

2. A traverse apparatus according to claim 1, **characterized in that** the ratio of the axial length to diameter of the permanent magnet (20) is at least 0.7.

3. A traverse apparatus according to claim 1 or claim 2, **characterized in that** the permanent magnet (20) is a rare earth magnet.

4. A traverse apparatus according to any one of claims 1 to 3, **characterized in that** the permanent magnet (20) has a maximum residual magnetic flux density of at least 0.3 tesla.

## Patentansprüche

1. Fadenchangiervorrichtung mit einer Antriebsvorrichtung (2) zum hin- und herbewegen eines Fadenführers (32) zur Führung eines Fadens, wobei
die Antriebsvorrichtung (2) eine rotierende Welle (28) umfasst, die mit dem Fadenführer zusammenwirkt und hin und her rotiert, um den Fadenführer (32) hin und her zu bewegen,
und ein zylindrischer Dauermagnet (20) um einen äußeren Umfang der rotierenden Welle (28) angebracht ist,
**dadurch gekennzeichnet, dass**
eine Vielzahl von Elektromagneten (21) entlang des äußeren Umfangs des Dauermagneten (20) um einen ringförmigen Spalt (25) angeordnet sind, sodass die Elektromagneten (21) den Dauermagneten (20) umgeben, um einen magnetischen Fluss zwischen den Elektromagneten (21) und dem Dauermagneten (20) durch den Spalt (25) zu erzeugen,
jeder Elektromagnet (21) eine elektrische Spule (22) und ein Joch (23) umfasst, welches ein fester Eisenkern ist und aus einem inneren Bogenabschnitt (23a), einem äußeren Bogenabschnitt (23b) und einem Verbindungsabschnitt (23c), der den inneren Bogenabschnitt (23a) und den äußeren Bogenabschnitt (23b) miteinander verbindet, aufgebaut ist, und
die elektrische Spule (22) um den Verbindungsabschnitt (23c) gewunden ist, und
die Vielzahl von Jochen (23) zylindrisch ausgebildet sind und so angeordnet sind, dass die benachbarten Joche (23) einander mit ihren inneren Bogenabschnitten (23a) und äußeren Bogenabschnitten (23b) berühren.

2. Fadenchangiervorrichtung nach Anspruch 1, **dadurch gekennzeichnet, dass** das Verhältnis der axialen Länge zum Durchmesser des Dauermagneten (20) zumindest 0,7 beträgt.

3. Fadenchangiervorrichtung nach Anspruch 1 oder 2, **dadurch gekennzeichnet, dass** der Dauermagnet (20) ein Magnet aus seltenen Erden ist.

4. Fadenchangiervorrichtung nach einem der Ansprüche 1 bis 3, **dadurch gekennzeichnet, dass** der Dauermagnet (20) eine maximale verbleibende magnetische Flussdichte von zumindest 0,3 Tesla aufweist.

## Revendications

1. Appareil de va-et-vient de fil comprenant un dispositif d'entraînement (2) pour soumettre à un mouvement alternatif un guide-fil (32) afin de guider un fil, dans lequel :
le dispositif d'entraînement (2) comprend un arbre rotatif (28) associé au guide-fil (32) et effectuant une rotation alternative pour soumettre le guide-fil (32) à un mouvement alternatif,
un aimant permanent cylindrique (20) est monté autour d'une périphérie externe de l'arbre rotatif (28),
**caractérisé en ce que**
une pluralité d'électroaimants (21) sont aménagés le long de la périphérie externe de l'aimant permanent (20) via un intervalle en forme d'anneau (25) de sorte que les électroaimants (21) entourent l'aimant permanent (20) pour générer un flux magnétique entre les électroaimants (21) et l'aimant permanent (20) à travers l'intervalle (25), chaque électroaimant (21) comprend une bobine électrique (22) et un arceau (23) qui est une âme de fer fixe et est composé d'une portion d'arc interne (23a), d'une portion d'arc externe (23b) et d'une portion de raccordement (23c) qui raccorde la portion d'arc interne (23a) et la portion d'arc externe (23b) ensemble ; et
la bobine électrique (22) est enroulée autour de la portion de raccordement (23c), et
la pluralité d'arceaux (23) ont une forme cylindrique et sont aménagés de sorte que les arceaux adjacents (23) viennent en contact l'un avec l'autre sur leurs portions d'arc internes (23a) et leurs portions d'arc externes (23b).

2. Appareil de va-et-vient de fil selon la revendication 1, **caractérisé en ce que** le rapport de la longueur axiale au diamètre de l'aimant permanent (20) est d'au moins 0,7.

3. Appareil de va-et-vient de fil selon la revendication 1 ou la revendication 2, **caractérisé en ce que** l'aimant permanent (20) est un aimant de terre rare.

4. Appareil de va-et-vient de fil selon l'une quelconque des revendications 1 à 3, **caractérisé en ce que** l'aimant permanent (20) a une densité de flux magnétique résiduel maximal d'au moins 0,3 tesla.
